# EUROPEAN PATENT APPLICATION

(11) **EP 1 998 529 A2**
(43) Date of publication of application: **03.12.2008**
(21) Application number: 08101330.2
(22) Date of filing: 06.02.2008
(51) Int. Cl.: H04L 29/06

(54) **Secure access to one network from another network**

(30) Priority: 13.02.2007 GB 0702765
(71) Applicant: Guryel, Ali, SE26 5BS London (GB)
(72) Inventor: Guryel, Ali, SE26 5BS London (GB)
(74) Representative: Brookes Batchellor LLP

(57) **Abstract**

A secure computer network system for educational establishments comprising a first network for educational data ("curriculum network") and a second, demarcated network for administrative and other confidential data ("administration network"), the two networks being connected by a firewall including NAT protection and also a context sensitive packet inspection system which only passes packets of predetermined content.

## Description

In some enterprise installations computer networks may be divided into multiple separate sections eg a "General Network" which extends to across the enterprise in many areas and a "Management Network" that is reserved primarily for management and administration and serves PCs in administration offices. Only administration and senior management staff are generally allowed to have access to these.

It would be a significant advantage for general staff around the site if they could access the administration network to obtain selective, limited specific range of data. Staff would be able to directly record time critical data and send online data, and receive and send e-mails/messages. They could do this using the PCs or laptops around the enterprise that are connected to the general Ethernet or wireless Wi-Fi networks.

Schools and colleges are just specific examples of such enterprises that are in need a secure access from one network to another.

In the case of a school these two networks generally comprise a "Curriculum Network" which extends to classrooms across the school and an "Administration Network" that is reserved primarily for administration and serves PCs in school offices. Again, it would be very useful for teachers in classrooms around the school if they could access the administration network to obtain student data be it attendance, grades, behaviour or contact details etc. Teachers would be able to directly record attendance/absences, collect and send online grades and behaviour data, and receive and send e-mails/messages. They could do this using the PCs or laptops in the classroom that are connected to the curriculum Ethernet or wireless Wi-Fi networks. Such a method of dealing with student data is not only economical but also operationally very attractive.

However, many Local Authorities/School Districts and schools do not allow this as there is a concern that the administration system might be particularly vulnerable to unauthorised access and hacking by students or anyone else. In an educational establishment, breaking into the administration network for malicious purposes would likely be the greatest concern. The source of the risk is the fact that modern school administration software requires that, on the administration server, many services (and ports) are left open, including, for example, the database server or even network directory services. Conventionally, for laptops or PCs on the curriculum network to be able send and access data on the administration network, all such ports need to be open between the two networks. In turn this leaves the administration data in a totally vulnerable position and this is why as a rule many schools keep the curriculum and administration networks isolated from each other.

The present invention therefore seeks to provide the facility to allow laptops and PCs on the curriculum network to be used by teachers for the collection of a wide range of administrative pupil data without compromising integrity or security.

Accordingly the present invention provides a secure computer network system for educational establishments comprising a first network for educational data ("curriculum network") and a second, demarcated network for administrative and other confidential data ("administration network"), the two networks being connected by a firewall including NAT protection and also a context sensitive packet inspection system which only passes packets of predetermined content.

It is therefore able to provide a safe, reliable and 'hack-free' solution to giving teachers access to data in the classroom. This solution does not use either port 13xx or port 80 for example and does not, in any case, allow direct queries into the school's MIS database.

To this end the present invention provides that the link between the curriculum network and the Class-server (with a unique identifying name) or other administration network server will be via a highly restricted router/firewall. This security filter is placed between the two networks and blocks all access other than very specific service calls from the Class-server client software running on the curriculum laptops/PCs to the administration server.

With this approach it is possible to achieve inherent security against hacking into the administration network whilst deploying industry standard networking protocols supported by all networks.

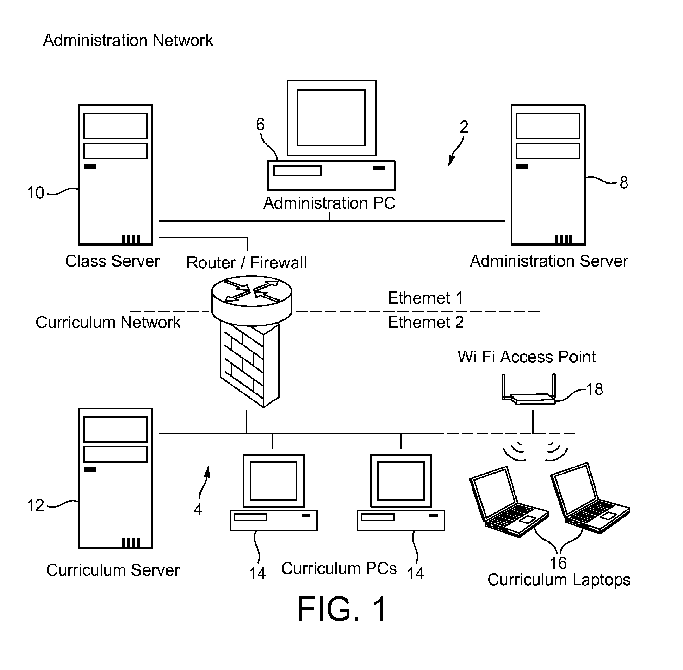

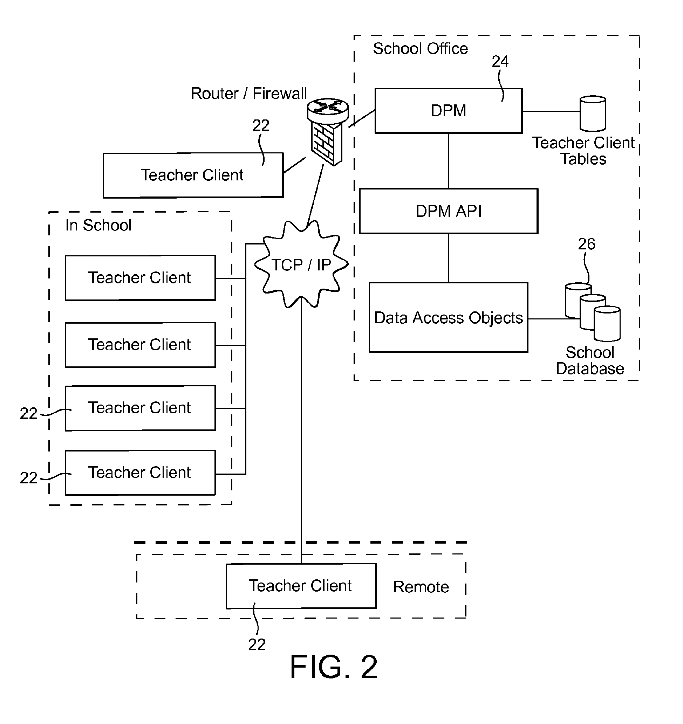

One embodiment of the invention will now be described with reference to the accompanying drawings in which Figure 1 is a schematic diagram of a school network, and Figure 2 is a diagrammatic illustration of a DPM (Data Processing Module) transaction.

Referring to Figure 1, this illustrates a school network comprising a first section (2) which comprises an "administration network" and a second demarcated section (4) comprising a "curriculum network". The first section (2) carries sensitive data which is only available, as a matter of course, to "administrative" users, e.g. PC (6) and is stored on an administration server (8). A "Class Server" (10) is also connected to the same network and is used to service requests from the "curriculum network" side of the system in a manner which will be explained below.

The second section (4) comprises a "curriculum server "(12) for data which is purely educational (as opposed to administrative) and directly serves client PC's (14) on a wired network, e.g. in classrooms, as well as a wireless access point (18) for mobile computers such as laptops (16).

The two sections are interconnected by a router/firewall (20) which only permits "Teacher clients" to communicate with the Class-server (10) using a proprietary protocol; no other equipment or standard interfaces are visible. The transactions exchanged between the Teacher Client application and the Class Server can be further encrypted if it is felt necessary to add another layer of protection.

The supplied router/firewall is fully-featured and policy based, providing far higher protection than basic Network Address Translation (NAT).

In this way the router/firewall (20) provides a restricted link between the two LAN segments, in this case the administration (2) and curriculum networks (4). The firewall is configured to allow only Teacher's client requests (on a specific port) to be forwarded to the Class server and thus it will only allow Teacher Client's traffic to cross between the networks.

### Advantages:

- The destination IP address is hidden from the curriculum network. Details of the administration network cannot be determined by users on the curriculum network even if traffic is intercepted. This is the normal extent of NAT protection but the advanced firewall also provides context sensitive packet inspection, preventing 'spoof' packets from being passed
- The only route into the Administration network from the Curriculum network is via a specific port, which is only used by Teacher's Client application. It is not a port that will be used by the standard operating system services such as web server, or RDBMS' such as Microsoft SQL server, IBM DB2 or Oracle for example.
- Only the administrator, using a serial cable physically connected to a serial port of the router/firewall device, can change the configuration. It cannot be hacked from either network.
- Only the Class server (10) can be accessed. Even Teacher clients are prevented from communicating with any other equipment on the protected side of the network (2).
- The Class server (10) and client applications only respond to their own predefined, non-generic transaction types and do not provide a route to data outside of this mechanism.
- If desired, the router can also be configured to allow access to the curriculum network from a client PC on the administration network.
- A highly efficient protocol sends only the data that is required, packaging the data into one packet and sending it in one transmission, making it very fast and keeping network traffic to a minimum. For a comparable data transfer total data traffic may be reduced 100 fold. The following description explains the scaleability of this solution.

The software running on the Class Server is referred to the Data Processing Module (DPM). DPM is designed as a "proxy" to the database and isolating the database from the users. DPM receives incoming requests and buffers them for more efficient manner to process them. Buffering the requests also reduces the number of open connections into the Class Server. DPM provides data access services for "Teacher Client" software running on PCs and Laptops. Communication between the Teacher Client and DPM is based on a predefined set of transactions. These transactions are very high level commands and are entirely independent of the hardware and software environment.

This is in contrast to network server software such as Novell or Microsoft Server 2005 or SQL Servers e.g. Microsoft SQL 2005. In these systems, access to data requires names of hard disk drives and names of the files and index records and the like.

DPM is a Windows Service that receives transaction requests from Teacher Clients. DPM's only other communication is with SQL Server databases and it executes stored procedures in these SQL Servers in order to retrieve the data that is needed.

As illustrated in Figure 2, DPM transaction requests generated by a Teacher Client (22) arrive at Class Server with a set of input parameters. DPM (24) services these requests by reference to database (26) and returns an output that is received by the originating Teacher Client (22).

Examples of the type of transaction requests that are permitted, are listed below.
1. Request for site configuration
2. Folder requests Teacher Client configuration
3. Sending folder configuration page (to Teacher Client)
4. Transmit data to Teacher Client (to RTU)
5. Request register
6. Send class list to Teacher Client
7. Save attendance
8. Failed transactions
9. Virtual forms (For EGB and EMB Sheets request)
10. Virtual forms sub type, send sheet descriptions
11. Virtual forms sub type, send group data to f with compressed data block
12. Virtual forms sub type, send group data to f with uncompressed data block
13. Virtual forms sub type, error message
14. Update email box request
15. Teacher Client sends mail
16. Virtual forms request
17. Virtual forms request
18. Pager request
19. Acknowledge pager message
20. Send firedrill group to Teacher Client
21. Teacher Client gets into pager mode
22. Teacher Client requests its pager message
23. Panic button request
24. Teacher Client requests firedrill group
25. Watch dog alarm
26. Send Browser page to Teacher Client
27. Teacher Client requests browser page
28. Teacher Client requests general purpose transaction
29. Sending to teacher Client general purpose transaction
30. Sending to Teacher Client acknowledgement
31. New wrapper command for Teacher Client (v3)

### • Teacher Client Audit Trail Transaction

1. Teacher Client sends its audit trail
2. Teacher Client sends register (for FE)

### • Extended General Purpose Transactions

1. "X" Teacher Client requests an Extended General Purpose Transaction
2. Teacher Client requests Date/Time
3. DPM sends Date/Time
4. Teacher Client requests tutor details
5. DPM sends tutor details
6. Teacher Client requests tutor details
7. DPM sends tutor details
8. Teacher Client requests tutor details
9. DPM sends tutor details
10. Teacher Client requests tutor details
11. DPM sends tutor details
12. Teacher Client requests Student Photo
13. DPM sends Student Photo

In use, each transaction will be identified by a predetermined code number together with one or more input parameters such as a specific class identifier.

In the specific case of an educational establishment the system works as follows:
Operational overview of Teacher Client - Class Server:
   A. Teacher Client and Class Server core interaction is via downloading and uploading 'Student list' with student data. The type of student data which accompanies the transaction depends upon the transaction type and can be attendance, grades, behaviour or a combination of them. Discrete student lists are prepared by the Class Server and downloaded and uploaded between the Class Server and Teacher Client PC/laptop. The Teacher Client PC/Laptop knows how to interpret the 'Class-Server packet' in accordance with a predetermined data format.
   B. A high level protocol is used in servicing the transactions and the Class Server Data packets are embedded within the TCP/IP packets.
   C. The Class Server software runs the DPM and is expanded to receive and send Class Server data packets via the TCP/IP socket. For efficiency and performance DPM buffers requests as a priority task. Teacher Client PCs/laptops do not 'see' the database on the Class Server, hence Teacher Clients do not 'connect' to the database in any way and they only deal with Class Server Data packets. DPM is truly a 'database proxy'
   D. Teacher Client PC/laptop does not have to be permanently connected to the server database or the network to be relied on in conventional manner ie 100% 'on-line'. This is quite different from conventional client-server systems and is significant from the network/bandwidth usage point of view. In conventional client server systems, a client application maintains a timestamp for every database' write' which is transmitted to the central server and is also timestamped in the local data files, which lets them to identify the data to be interchanged between the client and the server easily, with simple SQL statements.

On the other hand, the invention (Teacher Client -Class Server) application uses checksum calculations for filtering amount of data to be interchanged between Teacher Client and DPM. Again, the former approach, although it is easy to implement, simple to maintain, needs to store and transmit timestamps for every individual data record; whereas, the Teacher Client is optimized to consume the minimum bandwidth.

Due to the small foot print size of the program and low bandwidth requirements, "the Teacher Client" software allows a PC, even a low-specification older model with low network speeds, to become a Client, working the same way remarkably with very satisfactory speeds.

The way in which the "Teacher client" system operates, will now be explained in more detail.

### Installation

A single executable installation program is executed on the client workstation, which installs the Teacher Client software locally, together with appropriate shortcuts.

### Configuration

Each teacher is configured on the server as a Teacher Client user and is assigned a personal identification number (PIN), which is sent with EVERY transaction from Teacher Client to the Class Server and is validated every time. The username and PIN can be completely independent of the users' domain usernames and passwords and independent of which domain they are logged into (curriculum or administrative) or linked to network user name and password.

The user then enters the network address of the server into a configuration screen and requests and downloads a configuration packet of site-specific information, such as the list of possible attendance marks to be used in a register at that school and the number of periods in a day, via TCP/IP on a user-specified port.

Since the TCP/IP packet is sent to a specific IP address on a specific port and does not access any network resources, it does not matter whether the user is logged on to the curriculum or administrative network domains. The configuration request is authenticated at the server and a reply is sent to the client PC/laptop, including the necessary configuration information via TCP/IP to the laptop/PC's specific IP address on the same port.

The packets sent via the TCP/IP protocol are always identical to the packets sent between server and client machines. They are simply broken down into smaller packets and wrapped in an "address envelope" which gives the sender's address and the destination address and port used for communication. At the destination DPM software on the Class Server and Teacher Client on the client PC/laptop, the packets are automatically stripped of their "envelope" and reassembled into the communication packet

### Operation

The user loads the software via a command or pre-created "desktop shortcut" on the client workstation. The client workstation then loads the software from the local PC or laptop. No network access is initiated at this point.

The teacher enters their initials or staff code and PIN and selects the registration module to request a class register.

After typing in a class name, date and lesson number, the teacher requests the class register from the server. If the register for that class name, date and lesson number already exists locally then the user is asked whether they want to use the local copy or request an new copy from the server (which may contain more up-to-date information).

If a class is to be requested, a registration request packet is prepared and sent directly to the server via TCP/IP. TCP/IP must be used as the network transmission protocol because it is a "routeable" protocol (unlike NetBEUI, it can be "routed" from one network segment to another) and is not a "broadcast" protocol (unlike IPX/SPX, single packets are sent at a time to a specific address via a single route).

The DPM software running on the server assembles the packet and validates the teacher initials and PIN. DPM then, if validated, sends then pre-prepared register back to the Teacher Client on the PC/laptop via the reverse process. The register packet is received, reassembled and interpreted by Teacher Client and displayed as columns of names and marks (including previous marks enter for that class/day/lesson).

At this point, the PC/laptop can disconnect from the network and the teacher can mark the register at their leisure without causing inconvenience to other users, as all data is stored locally. Once the register is complete, the teacher can choose whether to save the register locally to send it back later or to send the register immediately using the same process as detailed above and in the *Configuration* section.

On a large network, hundreds of users could be using Teacher Client simultaneously to read and write attendance without any file locking or appreciable client network/application slow down as one program alone (DPM) has exclusive access to the database files and simply queues all the register read/write requests at high speed (because the register packets are pre-prepared), even on a low-specification server. Each request and reply transaction between the Teacher Client and the Class Server involves sending and receiving tiny packets of information and takes a fraction of a second.

Teacher Client users who are already in the process of taking or amending a register will not be inconvenienced nor lose any work done if the network link to the server is disconnected as they are not communicating with the server at that point.

### Server-side operations

Certain server-side operations, such as database file backups or student/teacher timetable updates from a timetabling package, require exclusive access to the database files. This means that only DPM must be temporarily stopped on the server because it has exclusive database access and no users need to be logged out of using the system.

Although the invention relies its own proprietary set of transactions, one of its key features is that it preserves compatibility to industry standard communication on any network by inserting the transaction and data between Class Server and Teacher Client directly into TCP/IP packets.

In this way, the invention is able to work across all type of networks e.g. LAN, . WLAN and different type of carrier e.g. Ethernet, WiFi and GSM/GRP i.e. basically any media that support TCP/IP.

### Further Enhancements:

The invention may also be extended by the following additional features:

### Additional network card in Class-server:

By adding a separate network connection, such as a second network card into the Class-server, the Class-server can further isolate the Curriculum network and Administration network. One network card is connected to Curriculum network through the Router and Firewall and the other network card to the Administration network. This provides a double layer of security against unauthorised access from the curriculum network.

### Encrypting the TCP/IP Packets:

Further security enhancements can be achieved by encrypting all the TCP/IP packets between the Class-server and Teacher-Clients and vice versa. Various industry standard encryption techniques are available for this.

### Compression of TCP/IP Packets:

In addition further efficiency can be achieved by compressing all the TCP/IP packets between the Class-server and Teacher-Clients and vice versa. Various industry standard compression techniques are available for this.

### Use of GPRS for outside school building use:

By relying purely on a TCP/IP communication layer, the invention may easily be adapted to utilise the public mobile/cell phone communication transmission infrastructure system and Internet connection to the school to provide a complete Teacher Client software package on a mobile / cell phone running Teacher Client software adapted to a mobile /cell phone operating system such as Symbian, Microsoft Mobile or via Java. This extends the use of Teacher clients beyond the parameters of the schools building for use by PE teachers eg at sport fields, public leisure centres and even on field trips. There is also a trend for schools to include work places as 'vocational' parts of the weekly curriculum eg auto-mechanics, hair-dressing, bakery etc... Schools can enable school class registers to be accessed from such work places via mobile / cell phone so as to provide instant and integrated attendance taking of students on such vocational courses.

## Claims

1. A secure computer network system for educational establishments comprising a first network for educational data ("curriculum network") and a second, demarcated network for administrative and other confidential data ("administration network"), the two networks being connected by a firewall including NAT protection and also a context sensitive packet inspection system which only passes packets of predetermined content.

2. A secure network system according to claim 1 in which the administration network includes at least one database server for administrative data, and a separate dedicated server acting as a proxy ("Class server") for servicing requests from the curriculum network.

3. A secure network system according to claim 2 in which a separate network connection is provided to connect the Class server to the Curriculum network through a router / firewall whereby the separate network connection further isolates the administration network from the curriculum network for servicing requests from the curriculum network.

4. A secure network system according to claim 2 or claim 3 in which the data exchange between Class server and a client requester is so arranged that no file names are required for source of the data required by the either Class server or client requester.

5. A secure network system for educational establishments according to any one of the preceding claims in which requests from the curriculum network to the administrative network are limited to network packets comprising transaction types identified by a series of predetermined code numbers together with corresponding input parameters to indicate the relevant specific item of interest.

6. A secure network system according to any preceding claim in which data to be exchanged between the networks is packed as a list of data items and relevant parameters in a prescribed manner in a single packet whereby the server and client can both disassemble the packet, manipulate the data, and repackage and return it if necessary, so as to provide a high degree of scalability in the number of clients that can be serviced in a short space of time the packets being encrypted for added security and compressed for further efficiency.

7. A secure network system according to claim 5 or claim 6 in which the client includes a data dictionary system whereby it can manipulate the data in the received packet in an off-line state and then return the manipulated data whenever it is again online, if required.

8. A secure network system according to any one of claims 4 to 7 in which each client is assigned a unique PIN (personal identification number) which must be included in every transaction.
